# EUROPÄISCHE PATENTSCHRIFT

(11) **EP 2 762 314 B1**
(45) Veröffentlichungstag und Bekanntmachung des Hinweises auf die Patenterteilung: **25.07.2018**
(21) Anmeldenummer: 14152580.8
(22) Anmeldetag: 27.01.2014
(51) Int. Cl.: B41F 13/08, F16C 13/00, F16C 3/02

(54) **Rotationszylinder**
Rotation cylinder
Cylindre rotatif

(30) Priorität: 01.02.2013 DE 102013101066
(43) Veröffentlichungstag der Anmeldung: 06.08.2014
(73) Patentinhaber: INOMETA GmbH, 32052 Herford (DE)
(72) Erfinder: Göhner, Christian, 32602 Vlotho (DE)
(74) Vertreter: Bittner, Thomas L.

(56) Entgegenhaltungen:
- EP-A1- 0 519 301
- WO-A1-2011/139215
- DE-A1- 19 939 775
- DE-A1-102009 055 767
- DE-C1- 3 527 711

## Beschreibung

Die Erfindung betrifft einen Rotationszylinder, insbesondere einen Druckmaschinen- oder Druckwerkszylinder.

### Hintergrund

Rotationszylinder sind zylindrische Bauteile, die im Rahmen ihrer Verwendung im Betrieb Drehbewegungen ausführen. Zu derartigen Rotationszylindem gehören insbesondere Druckmaschinen- oder Druckwerkszylinder, die in verschiedenen Arten von Druckmaschinen zum Einsatz kommen, beispielsweise in Rotationsdruckmaschinen, insbesondere zum Offset- und Flexodruck.

Beim Betrieb der Rotationszylinder besteht regelmäßig das Ziel, durch die Drehung und / oder durch von außen zugeführte Anregungen eventuell verursachte Schwingungen oder Vibrationen des Rotationszylinders zumindest zu dämpfen oder ganz zu vermeiden, da solche Schwingungen üblicherweise zu Lasten des Arbeitsqualität und der Lebensdauer der betroffen Maschinenkomponenten gehen. Im Fall von Druckmaschinen lassen sich solche schädlichen Schwingungen mittels unterschiedlicher Ansätze reduzieren. Im einfachsten Fall verringert der Anwender während des Prozesses die Druckgeschwindigkeit bis die Amplitude der Schwingung auf ein akzeptables Maß reduziert wurde. Diese Maßnahme ist natürlich ein kurzfristiges Mittel und im Sinne der Wirtschaftlichkeit keine tatsächliche Lösung.

Es wurde versucht, eine möglichst hohe Dämpfung mittels passiver oder aktiver Wirkmechanismen in die Druckmaschinensysteme zu integrieren. Lösungen zur Nutzung aktiver Sensoren und Aktoren zur Schwingungsdämpfung sind regelmäßig aufwendig und teuer. Zur passiven Strukturdämpfung, beispielsweise in Verbindung mit einer Walze, wurden Dämpferelemente in der Lagerung oder innerhalb des Walzenkörpers vorgesehen.

Aus dem Dokument DE 41 198 25 C1 ist ein Druckmaschinenzylinder mit Schwingungsdämpfung bekannt. Der Druckmaschinenzylinder ist einstückig ausgebildet und weist in seinem Inneren einen sich in axialer Richtung erstreckenden symmetrischen oder rotationssymmetrischen Innenkörper auf, wobei der Innenkörper und / oder die Innenkörperzapfen ganz oder teilweise mit schwingungsdämpfendem Material umgeben sind.
Aus dem Dokument DE 10 2006 042 959 B4 sind ein Verfahren und eine Vorrichtung zum Reduzieren von Schwingungen eines rotierenden Zylinders einer Druckmaschine bekannt. Während einer Rotation des Druckzylinders wird mindestens eine Resonanzfrequenz des Zylinders durch Einbringen oder Ausleiten von Massen in das Innere oder aus dem Inneren des Zylinders verändert, wobei ein Befüllungszustand des Zylinders so verändert wird, dass eine Eigenfrequenz des Zylinders kein ganzzahliges Vielfaches einer aktuellen oder einer Soll-Drehfrequenz des Zylinders ist.
Im Dokument DE 90 18 118 U1 ist eine Vorrichtung zur Dämpfung von Biegeschwingungen von Druckwerkszylindern durch Dämpfungssysteme in Rotationsdruckmaschinen bekannt. In einem Druckwerkszylinder sind ein oder mehrere breitbandig abstimmbare Dämpfer vorgesehen, deren Eigenfrequenz der des jeweiligen Druckzylinders entspricht. Die Dämpfer werden zum Druckwerkszylinder gegenphasig ausgelenkt.
Im Dokument DE 35 27 711 C1 ist vorgesehen, in einem Druckwerkzylinder über mit dem Zylindermantel verbundene Stege Schwingungen einem Dämpfungssystem zuzuführen, um durch Absorption diese zu vernichten oder zu reduzieren. Hierzu ist unterhalb des Zylindermantels eine Stoßstelle vorgesehen, über die ein Dämpfungselement zusätzlich beim Überrollen von Kanälen anregbar ist.
Im Dokument DE 600 18 592 T2 ist eine Schwingungsdämpfungsvorrichtung offenbart zur Verwendung in einem Walzwerk. Eine Walze mit Schwingungsdämpfer ist auch aus dem Dokument EP 1936 214 A2 bekannt. Es ist ein dem Arbeitsumfang der Walze bildender und einen Raum (R) umschließender Walzenmantel vorgesehen mit einem einen Ringraum zum Walzenmantel belassenden, den Walzenmantel in Längsrichtung durchsetzenden Träger. Weiterhin ist eine Einrichtung zur Schwingungsdämpfung vorgesehen, die innerhalb des Raumes (R) angeordnet und ausschließlich an dem Träger angekoppelt ist.

Das Dokument WO 2011/139215 A1 offenbart einen Druckzylinder mit einem zylindrischen Körper, welcher aus einem ersten Material gebildet ist, einer Zwischenschicht aus einem zweiten Material und einer äußeren Hülse aus einem dritten Material. Ein Young-Modul des zweiten Materials ist wesentlich kleiner als das Young-Modul des ersten und dritten Materials.
Das Dokument DE 199 39 775 A1 offenbart einen Druckzylinder aus konzentrischen Zylinderrohren in Sandwichbauweise. In einem Zwischenbereich zwischen einem Außenrohr und einem darin angeordneten Innenrohr ist eine Schaumfüllung angeordnet.
Das Dokument DE 10 2009 055 767 A1 offenbart eine Druckzylinderanordnung für eine Rotationsdruckmaschine mit einem drehbar in einem Maschinengestell gelagerten Dorn und einer Hülse, die den Dorn in einem Abstand umgibt. Beide Enden der Hülse sind starr auf dem Dorn abgestützt. Innerhalb der Hülse ist eine Schwingungsdämpfungseinrichtung zur Dämpfung von Biegeschwingungen des Dorns angeordnet.

Das Dokument EP 0 519 301 A1 offenbart einen Druckmaschinenzylinder mit einer Schwingungsdämpfung gemäß dem Oberbegriff vom Anspruch 1. Der Druckmaschinenzylinder weist einen rotationssymmetrischen Kern auf, der ganz oder teilweise mit einem schwingungsdämpfenden Material umgeben ist.

Das Vorsehen von Dämpferelementen in der Lagerung oder innerhalb des Walzenkörpers hat häufig den Nachteil, dass für den Dämpfungseffekt eine direkte Nachgiebigkeit der Struktur aufgenommen werden muss, was zur Folge hat, dass der Zylinder an Struktursteifigkeit verliert, so dass die Wahrscheinlichkeit für Durchbiegung und kritische Drehzahlen sich erhöht.

### Zusammenfassung

Aufgabe der Erfindung ist es, einen Rotationszylinder, insbesondere Druckmaschinen- oder Druckwerkszylinder, mit verbesserten Dämpfungseigenschaften gegenüber im Betrieb auftretenden Schwingungen anzugeben.
Diese Aufgabe wird gelöst durch einen Rotationszylinder, insbesondere Druckmaschinen- oder Druckwerkszylinder, nach dem unabhängigen Anspruch 1. Vorteilhafte Ausgestaltungen sind Gegenstand der abhängigen Unteransprüche.
Es ist ein Rotationszylinder, insbesondere Druckmaschinen- oder Druckwerkszylinder geschaffen, welcher einen Außenkörper und einen Innenkörper aufweist. Der Innenkörper ist innerhalb des Außenkörpers angeordnet, derart, dass ein oder mehrere Innenflächenabschnitte des Außenkörpers auf zugeordneten Außenflächenabschnitten des Innenkörpers lagern. Der Außen- und / oder der Innenkörper können einen ein- oder einen mehrschichtigen Aufbau aufweisen. Es kann am Außen- und / oder am Innenkörper eine zumindest teilweise ausgebildete Oberflächenbeschichtung vorgesehen sein. Der Innenkörper ist zumindest im Bereich der aufeinander lagernden Flächenabschnitte mit seinem äußeren Umfang formschlüssig in dem von der Innenfläche umgebenen Innenraum des Außenkörpers aufgenommen. Der Rotationszylinder verfügt sodann über eine endseitige Lagereinrichtung, an welcher zumindest der Außenkörper ein- oder beidseitig aufgenommen ist. Die endseitige Lagereinrichtung kann dazu dienen, den Rotationszylinder an einen Rotationsantrieb zu koppeln. Beispielsweise ist die endseitige Lagereinrichtung mit einem oder zwei endseitigen Lagerzapfen gebildet.

Sodann verfügt der Rotationszylinder über eine Dämpfungseinrichtung mit wenigstens einem Dämpfungselement aus einem elastisch verformbaren Material, welches an den Außenkörper und / oder den Innenkörper mechanisch koppelt, derart, dass das wenigstens eine Dämpfungselement im Rotationsbetrieb schwingungsbedingte Relativbewegungen von Außenkörper und Innenkörper zueinander mittels elastischer Schubverformung aufnimmt und dämpft. Wird der Rotationszylinder im Betrieb in Drehbewegung versetzt, so kommt es regelmäßig zu Schwingungen des Rotationszylinders, wodurch Relativbewegungen von Außenkörper und Innenkörper zueinander auftreten können. Diese Relativbewegungen werden von dem wenigstens einen Dämpfungselement aufgenommen, derart, dass auf das elastisch verformbare Material auftreffenden Schubkräfte aufgenommen und gedämpft werden. Das wenigstens eine Dämpfungselement verformt sich hierbei und setzt gleichzeitig der schwingungsbedingten Relativbewegung eine Dämpfungskraft entgegen. Das wenigstens eine Dämpfungselement nimmt eine in axialer Richtung des Rotationszylinders verlaufende Komponente der Relativverlagerung zwischen Außen- und Innenkörper auf und dämpft diese mittels elastischer Verformung.

Bei dem vorgeschlagenen Rotationszylinder ist eine effiziente Dämpfung auf kostengünstige Weise erreicht.

Der Außenkörper des Rotationszylinders kann aus einem faserverstärkten Verbundmaterial bestehen, beispielsweise einem Kohlefaserverstärkten Kunststoffmaterial.

Außenkörper und / oder Innenkörper können als Rohr ausgeführt sein, so dass dann ein Außenrohr und ein Innenrohr gebildet sind.

Die Innenfläche des Außenkörpers kann radial umlaufend auf der Außenfläche des Innenkörpers aufliegen. Beispielsweise können solche Kontaktflächen zwischen Außenkörper und Innenkörper an den gegenüberliegenden Enden des Rotationszylinders vorgesehen sein.

Bei der Ausführung als Druckmaschinen- oder Druckwerkszylinder kann es sich um einen Zylinder für eine Rotationsdruckmaschine handeln, insbesondere eine Rotationsdruckmaschine für den Offset- oder den Flexodruck.

Eine Weiterbildung sieht vor, dass das wenigstens eine Dämpfungselement aufgrund der schwingungsbedingten Relativbewegungen von Außenkörper und Innenkörper entstehende Scherkräfte aufnehmend gebildet ist.

Bei einer Ausgestaltung kann vorgesehen sein, dass das wenigstens eine Dämpfungselement mit zumindest einer zugeordneten Aufnahme zusammenwirkt, die am Außen- und / oder am Innenkörper gebildet ist. Bei der zugeordneten Aufnahme kann es sich zum Beispiel um eine Vertiefung, eine Ausnehmung, eine Bohrung oder einen Durchbruch am Außen- oder am Innenkörper handeln. Aber auch ein Vorsprung kann am Außen- oder Innenkörper vorgesehen sein, an welchen das wenigstens eine Dämpfungselement mechanisch koppelt. Bei dieser oder anderen Ausführungsformen können mit Hilfe des wenigstens einen Dämpfungselementes der Außenkörper und der Innenkörper direkt oder indirekt verbunden sein.

Eine Ausführungsform sieht vor, dass das wenigstens eine Dämpfungselement mit einer Aufnahme am Außenkörper und einer der Aufnahme am Außenkörper zugeordneten Aufnahme am Innenkörper zusammenwirkt. Die beiden Aufnahmen, die am Außenkörper einerseits und am Innenkörper andererseits gebildet sind, können einander gegenüberliegend angeordnet sein. Es kann vorgesehen sein, dass im Außenkörper ein Durchbruch gebildet ist, dem am Innenkörper gegenüberliegend ein Durchbruch oder eine Vertiefung angeordnet ist. Der hierdurch gebildete Hohlraum in Außen- und Innenkörper kann zum Ausbilden des wenigstens einen Dämpfungselementes mit dem elastisch verformbaren Material gefüllt werden, zumindest teilweise. Bei diesen oder anderen Ausführungsformen ist so ein sich in radialer Richtung erstreckendes Dämpfungselement gebildet. Kommt es nun im Betrieb des Rotationszylinders zu Schwingungen, welche ihrerseits eine Relativverlagerung von Außenkörper und Innenkörper zueinander verursachen, so wirkt das Dämpfungselement hierauf dämpfend. Es verformt sich elastisch aufgrund der auf das Dämpfungselement wirkenden Schub- und / oder Scherkräfte. Das wenigstens eine Dämpfungselement kann als Zapfenelement ausgeführt sein.

Bevorzugt sieht eine Fortbildung vor, dass die Dämpfungseinrichtung in dem Bereich gebildet ist, in welchem der eine oder die mehreren Innenflächenabschnitte des Außenkörpers auf den zugeordneten Außenflächenabschnitten des Innenkörpers lagern.

Bei einer vorteilhaften Ausgestaltung kann vorgesehen sein, dass die Dämpfungseinrichtung außerhalb des Bereiches gebildet ist, in welchem der eine oder die mehreren Innenflächenabschnitte des Außenkörpers auf den zugeordneten Außenflächenabschnitten des Innenkörpers lagern. Außerhalb des Bereiches, in welchem die Innenflächenabschnitte und die Außenflächenabschnitte aufeinander lagern, können die einander gegenüberliegenden Oberflächen von Außenkörper und Innenkörper voneinander beabstandet sein. So kann vorgesehen sein, dass die aufeinander liegenden Flächenabschnitte in einem oder beiden Endbereichen des Rotationszylinders angeordnet sind, wohingegen die gegenüberliegenden Oberflächen von Außen- und Innenkörper im mittleren Bereich beabstandet sind. Im Bereich nicht aufeinander lagernder Flächenabschnitte können ein oder mehrere Dämpfungselemente gebildet sein.

Eine Weiterbildung kann vorsehen, dass die Dämpfungseinrichtung radial umlaufend gebildet ist. Zum Beispiel können mehrere Dämpfungselemente aus elastischem Material umlaufend gebildet sein. So kann vorgesehen sein, umlaufend Bohrungen durch Außen- und Innenkörper vorzusehen, die mit dem elastisch verformbaren Material gefüllt sind. Solche Dämpfungselemente können einem auswählbaren Muster entsprechend über die gesamte Oberfläche des Außenkörpers verteilt sein, sei es nach einem zufälligen, nicht geordneten oder einem regelmäßigem Muster.

Eine Weiterbildung sieht vor, dass die Dämpfungseinrichtung sich axial erstreckend gebildet ist. Es kann vorgesehen sein, dass Durchbrüche oder Vertiefungen mit hierin aufgenommenem elastischen Material in Außen- und Innenkörper entlang einer Teillänge des Rotationszylinders in axialer Richtung oder sogar über die gesamte Länge des Rotationszylinders gebildet sind. Bei diesen oder anderen Ausführungsformen können das eine oder die mehreren sich radial erstreckenden Dämpfungselemente wahlweise kombiniert werden mit Dämpfungselementen aus dem elastisch verformbaren Material, die sich in axialer Richtung erstrecken, beispielsweise in Form von Dämpfungselementen, die sich flächig zwischen Außen- und Innenkörper erstrecken. Ein oder mehrere Dämpfungselemente können mit einem sich radial sowie einem sich axial erstreckenden Abschnitt gebildet sein.

Bei einer Ausgestaltung kann vorgesehen sein, dass das wenigstens ein Dämpfungselement mit einem flächigen Dämpfungsabschnitt zwischen der Innenfläche des Außenkörpers und der Außenfläche des Innenkörpers gebildet ist. Hierbei kann sich das flächige Dämpfungselement radial umlaufend erstrecken.

Eine vorteilhafte Ausführungsform sieht vor, dass die Dämpfungseinrichtung Biegeschwingungen des Außenkörpers dämpfend gebildet ist.

Bevorzugt sieht eine Fortbildung vor, dass der Außenkörper als tragender Außenkörper gebildet ist. Ein tragender Außenkörper kann beispielsweise aus einem faserverstärkten Material hergestellt werden, beispielsweise einem faserverstärkten Kunststoffmaterial. Ein Beispiel für faserverstärkte Materialien sind kohlefaserverstärkte Materialien.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Querschnittsdarstellung eines Rotationszylinders, bei dem eine Außenfläche eines Innenkörpers durchgehend an einer Innenseite eines Außenkörpers anliegt,
- Fig. 2: eine schematische Querschnittsdarstellung eines Rotationszylinders, bei dem die Außenfläche des Innenkörpers abschnittsweise auf der Innenseite des Außenkörpers lagert,
- Fig. 3: eine schematische Querschnittsdarstellung eines Rotationszylinders, bei dem Dämpfungselemente gegenüber stirnseitigen Enden des Innenkörpers angeordnet sind,
- Fig. 4: einen Abschnitt des Rotationszylinders aus Fig. 1, 2 oder 3 oder mit einem Dämpfungselement im Querschnitt,
- Fig. 5: eine schematische Querschnittsdarstellung eines Dämpfungselementes mit sich kreuzenden Elementabschnitten und
- Fig. 6: eine schematische Querschnittsdarstellung eines Abschnittes des Rotationszylinders nach der Ausführung in Fig. 1, 2 oder 3 mit einem Dämpfungselement, welches sich in Umfangsrichtung erstreckt.

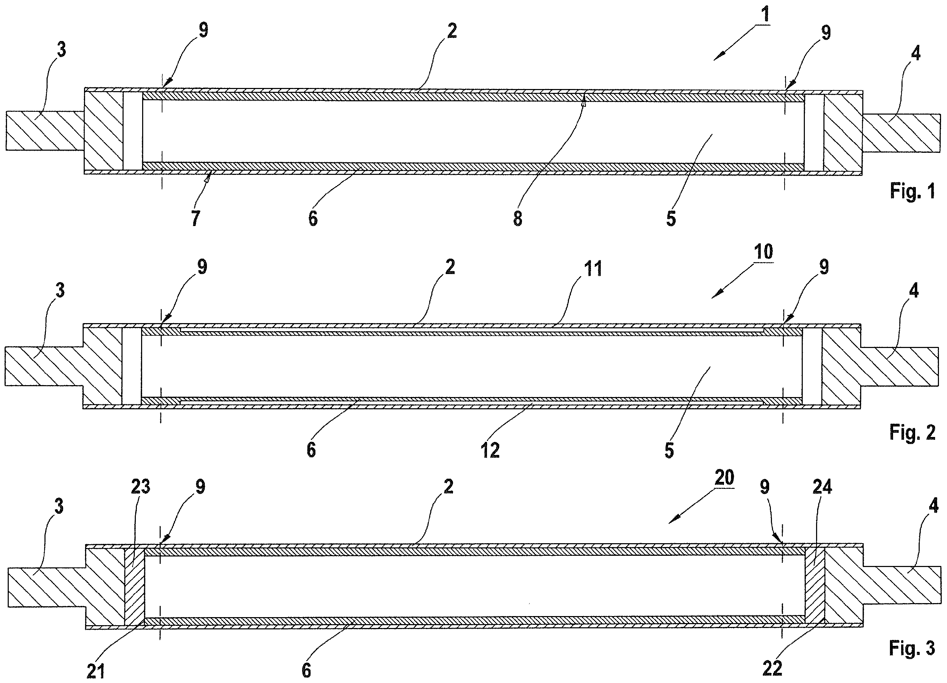

Fig. 1 zeigt eine schematische Querschnittsdarstellung eines Rotationszylinders 1 mit einem Außenkörper 2, welcher bei dem dargestellten Ausführungsbeispiel als Außenrohr gebildet ist, zum Beispiel aus Metall oder einem kohlefaserverstärktem Kunststoffmaterial. Der Außenkörper 2 bildet einen tragenden Körper des Rotationszylinders 1, welcher beispielsweise als Druckmaschinen- oder Druckwerkszylinder nutzbar ist, insbesondere im Zusammenhang mit einer Druckmaschine für den Offset- oder den Flexodruck. Endseitig sind am Außenkörper 2 Lagerzapfen 3, 4 aufgenommen. Im Innenraum 5 des Außenkörpers 2 ist ein Innenkörper 6 angeordnet, welcher in dem gezeigten Ausführungsbeispiel als Innenrohr gebildet ist. Der Innenkörper 6 kann zum Beispiel aus Metall oder faserverstärktem Kunststoff sein.
Bei der in Fig. 1 gezeigten Ausführungsform liegt eine Außenfläche 7 des Innenkörpers 6 durchgehend und umlaufend an einer Innenfläche 8 des Außenkörpers 2 an. Der Innenkörper 6 ist insoweit formschlüssig in den Außenkörper 2 eingepasst, derart, dass eine freie Verschiebbarkeit in Axialrichtung möglich ist, bevor dann Dämpfungselemente 9 ausgebildet werden, welche dieser freien Verschiebbarkeit entgegenwirken. In Fig. 1 sind die Dämpfungselemente 9 nur schematisch mittels Strichen angedeutet. Die Dämpfungselemente 9 sind gebildet, indem im Außenkörper 2 ein oder mehrere Durchbrüche mittels Bohren hergestellt werden. Dem Durchbruch im Außenkörper 2 zugeordnet ist eine Vertiefung oder ebenfalls ein Durchbruch am Innenkörper 6. Die Vertiefung oder der Durchbruch sind am Innenkörper 6 fluchtend mit dem Durchbruch am Außenkörper 2 gebildet. Der hierdurch gebildete Hohlraum, welcher sich im Außenkörper 2 und im Innenkörper 6 erstreckt, ist mit einem elastisch verformbaren Material gefüllt, um so die Dämpfungselemente 9 herzustellen, die zum Beispiel eine Zapfenform aufweisen.
Die Dämpfungselemente 9 bestehen in dieser oder anderen Ausführungen aus einem elastischen Material mit einem ausreichenden Schubverlustmodul, zum Beispiel Polyurethan oder Kautschuk.
Es kann vorgesehen sein, dass im Innenkörper 6 ein Durchbruch mittels Bohren hergestellt wird und die Vertiefung am Außenkörper 2 fluchtend mit dem Durchbruch am Innenkörper 6 gestaltet ist, so dass das Dämpfungselement 9 von innen platziert werden kann.

Fig. 2 zeigt eine schematische Querschnittsdarstellung eines Rotationszylinders 10, bei dem im Übrigen für die gleichen Merkmale dieselben Bezugszeichen wie in Fig. 1 verwendet sind. Im Unterschied zur Ausführung nach Fig. 1 sind die Außenfläche 7 des Innenkörpers 6 und die Innenfläche 8 des Außenkörpers 2 in einem mittleren Abschnitt 11 des Rotationszylinders 10 voneinander beabstandet, so dass ein Hohlraum 12 gebildet ist.

Fig. 3 zeigt eine schematische Querschnittsdarstellung eines weiteren Rotationszylinders 20, bei dem zwischen den Lagerzapfen 3, 4 und gegenüberliegenden Stirnseiten 21, 22 des Innenkörpers 6 Dämpfungselemente 23, 24 aus elastisch verformbaren Material angeordnet sind. Die Dämpfungselemente 23, 24 können bei den Ausführungsformen nach den Fig. 1 und 2 ein- oder beidseitig ergänzend vorgesehen sein.

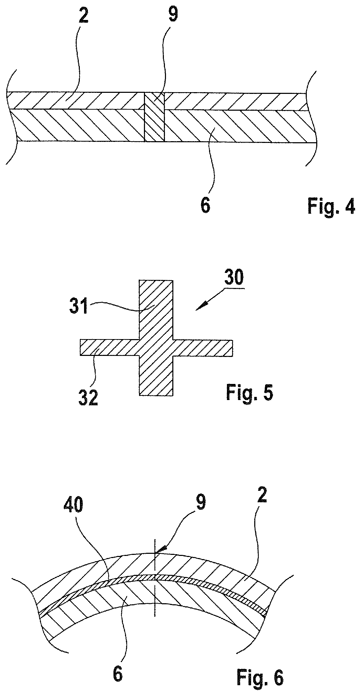

Fig. 4 zeigt einen Abschnitt des Rotationszylinders aus Fig. 1, 2 oder 3 oder mit einem Dämpfungselement 9 im Querschnitt.

Fig. 5 zeigt eine schematische Schnittdarstellung eines Dämpfungselementes 30, welches über sich kreuzende Elementabschnitte 31, 32 verfügt. Das Dämpfungselement 30 ist aus einem elastisch verformbaren Material. Ein derartiges Dämpfungselement, welches sich an dem Rotationszylinder dann in radialer und axialer Richtung erstreckt, kann beispielsweise bei der Ausführung nach Fig. 2 gebildet werden, wenn in dem mittleren Abschnitt 11, wo die Innenfläche 8 des Außenkörpers 2 und die Außenfläche 7 des Innenkörpers 6 voneinander beabstandet sind, von außen eine Bohrung eingebracht wird, die anschließend mit elastisch verformbaren Material gefüllt wird. Das eingebrachte Material verteilt sich dann nicht nur in radialer Richtung entlang der Bohrung, sondern auch quer, nämlich in axialer Richtung im Zwischenraum 12 zwischen Innenkörper 6 und Außenkörper 2.

Fig. 6 zeigt eine schematische Schnittdarstellung eines anderen Dämpfungselementes 40, welches ganz oder teilweise in Umfangsrichtung über eine Nut oder sogar vollflächig zwischen dem Innenkörper 6 und dem Außenkörper 2 ausbildet. Das Dämpfungselement kann über Bohrungen injiziert werden. Eine Integration von Dämpfungshalbzeugen, zum Beispiel Gummiringen, zwischen dem Innenkörper 6 und dem Außenkörper 2 kann ebenso vorgesehen sein.

## Patentansprüche

1. Rotationszylinder, insbesondere Druckmaschinenzylinder, mit
- einem Außenkörper (2),
- einem Innenkörper (6), welcher innerhalb des Außenkörpers (2) angeordnet ist,
- einer endseitigen Lagereinrichtung (3, 4), an welcher zumindest der Außenkörper (2) ein- oder beidseitig aufgenommen ist, und
- einer Dämpfungseinrichtung mit wenigstens einem Dämpfungselement (9; 30; 40) aus einem elastisch verformbaren Material, welches an den Außenkörper (2) und den Innenkörper (6) mechanisch koppelt, derart, dass das wenigstens eine Dämpfungselement (9; 30; 40) im Rotationsbetrieb schwingungsbedingte Relativbewegungen von Außenkörper (2) und Innenkörper (6) zueinander mittels elastischer Schubverformung aufnimmt und dämpft,
**dadurch gekennzeichnet, dass**
- der Innenkörper (6) in den Außenkörper (2) formschlüssig eingepasst ist, derart, dass ein oder mehrere Innenflächenabschnitte des Außenkörpers (2) auf zugeordneten Außenflächenabschnitten des Innenkörpers (6) lagern, und
- beim Aufnehmen der schwingungsbedingten Relativbewegungen von Außenkörper (2) und Innenkörper (6) zwischen Außenkörper (2) und Innenkörper (6) eine freie Verschiebbarkeit in Axialrichtung gegeben ist, bevor das wenigstens eine Dämpfungselement (9; 30; 40) der freien Verschiebbarkeit entgegenwirkt.

2. Rotationszylinder nach Anspruch 1, **dadurch gekennzeichnet, dass** das wenigstens eine Dämpfungselement (9; 30; 40) aufgrund der schwingungsbedingten Relativbewegungen von Außenkörper (2) und Innenkörper (6) entstehende Scherkräfte aufnehmend gebildet ist.

3. Rotationszylinder nach Anspruch 1 oder 2, **dadurch gekennzeichnet, dass** das wenigstens eine Dämpfungselement (9; 30; 40) mit zumindest einer zugeordneten Aufnahme zusammenwirkt, die am Außen- und / oder am Innenkörper (2, 6) gebildet ist.

4. Rotationszylinder nach Anspruch 3, **dadurch gekennzeichnet, dass** das wenigstens eine Dämpfungselement (9; 30; 40) mit einer Aufnahme am Außenkörper (2) und einer der Aufnahme am Außenkörper (2) zugeordneten Aufnahme am Innenkörper (6) zusammenwirkt.

5. Rotationszylinder nach mindestens einem der vorangehenden Ansprüche, **dadurch gekennzeichnet, dass** die Dämpfungseinrichtung in dem Bereich gebildet ist, in welchem der eine oder die mehreren Innenflächenabschnitte des Außenkörpers (2) auf den zugeordneten Außenflächenabschnitten des Innenkörpers (6) lagern.

6. Rotationszylinder nach mindestens einem der vorangehenden Ansprüche, **dadurch gekennzeichnet, dass** die Dämpfungseinrichtung außerhalb des Bereiches gebildet ist, in welchem der eine oder die mehreren Innenflächenabschnitte des Außenkörpers (2) auf den zugeordneten Außenflächenabschnitten des Innenkörpers (6) lagern.

7. Rotationszylinder nach mindestens einem der vorangehenden Ansprüche, **dadurch gekennzeichnet, dass** die Dämpfungseinrichtung radial umlaufend gebildet ist.

8. Rotationszylinder nach mindestens einem der vorangehenden Ansprüche, **dadurch gekennzeichnet, dass** die Dämpfungseinrichtung sich axial erstreckend gebildet ist.

9. Rotationszylinder nach mindestens einem der vorangehenden Ansprüche, **dadurch gekennzeichnet, dass** das wenigstens eine Dämpfungselement (30) mit einem flächigen Dämpfungsabschnitt zwischen der Innenfläche des Außenkörpers (2) und der Außenfläche des Innenkörpers (6) gebildet ist.

10. Rotationszylinder nach mindestens einem der vorangehenden Ansprüche, **dadurch gekennzeichnet, dass** die Dämpfungseinrichtung Biegeschwingungen des Außenkörpers (2) dämpfend gebildet ist.

11. Rotationszylinder nach mindestens einem der vorangehenden Ansprüche, **dadurch gekennzeichnet, dass** der Außenkörper (2) als tragender Außenkörper gebildet ist.

12. Druckmaschinenzylinder, aufweisend einen Rotationszylinder nach mindestens einem der vorangehenden Ansprüche.

## Claims

1. Rotary cylinder, in particular printing machine cylinder, with
- an outer body (2),
- an inner body (6), which is arranged inside the outer body (2),
- an end bearing device (3, 4) on which at least the outer body (2) is accommodated on one or both sides, and
- a damping device having at least one damping element (9; 30; 40) made of an elastically deformable material which is mechanically coupled to the outer body (2) and the inner body (6) such that the at least one damping element (9; 30; 40) absorbs and damps vibration-related movements of outer body (2) and inner body (6) relative to one another by means of elastic shear deformation during rotary operation,
**characterized in that**
- the inner body (6) is positively fitted within the outer body (2) such that one or more inner surface portions of the outer body (2) are seated on associated outer surface portions of the inner body (6), and
- when the vibration-related relative movements of the outer body (2) and inner body (6) are absorbed, there is free displacement in the axial direction between the outer body (2) and inner body (6) before the at least one damping element (9; 30; 40) counteracts the free displacement.

2. Rotary cylinder according to claim 1, **characterized in that** the at least one damping element (9; 30; 40) is so formed as to absorb shear forces arising from the relative movements of the outer body (2) and inner body (6) due to vibration.

3. Rotary cylinder according to Claim 1 or 2, **characterized in that** the at least one damping element (9; 30; 40) engages in at least one associated seat formed on the outer and/or inner body (2, 6).

4. Rotary cylinder according to claim 3, **characterized in that** the at least one damping element (9; 30; 40) engages in a receptacle on the outer body (2) and a receptacle on the inner body (6) associated with the receptacle on the outer body (2).

5. Rotary cylinder according to at least one of the preceding claims, **characterized in that** the damping device is formed in the region in which the one or more inner surface portions of the outer body (2) are seated on the associated outer surface portions of the inner body (6).

6. A rotary cylinder according to at least one of the preceding claims, **characterized in that** the damping device is formed outside the region in which the one or more inner surface portions of the outer body (2) are seated on the associated outer surface portions of the inner body (6).

7. Rotary cylinder according to at least one of the preceding claims, **characterized in that** the damping device is formed in a radially circumferential manner.

8. Rotary cylinder according to at least one of the preceding claims, **characterized in that** the damping device takes a form that extend axiaily.

9. Rotary cylinder according to at least one of the preceding claims, **characterized in that** the at least one damping element (30) is formed with a damping portion covering an area between the inner surface of the outer body (2) and the outer surface of the inner body (6).

10. Rotary cylinder according to at least one of the preceding claims, **characterized in that** the damping device is formed to damp bending vibrations of the outer body (2).

11. Rotary cylinder according to at least one of the preceding claims, **characterized in that** the outer body (2) is formed as a load-bearing outer body.

12. Printing machine cylinder comprising a rotary cylinder according to at least one of the foregoing claims.

## Revendications

1. Cylindre rotatif, en particulier cylindre de presse d'imprimerie, comportant
- un corps extérieur (2),
- un corps intérieur (6) qui est disposé à l'intérieur du corps extérieur (2),
- un dispositif de palier côté extrémité (3, 4) sur lequel au moins le corps extérieur (2) est logé sur un côté ou les deux côtés, et
- un dispositif amortisseur comportant au moins un élément amortisseur (9, 30, 40) constitué d'un matériau élastique déformable qui s'accouple mécaniquement au corps extérieur (2) et au corps intérieur (6) de telle sorte qu'au moins un élément amortisseur (9, 30, 40) absorbe et amortisse les mouvements relatifs liés aux vibrations du corps extérieur (2) et du corps intérieur (6) l'un par rapport à l'autre au moyen d'une déformation de cisaillement élastique pendant la rotation,
**caractérisé par le fait**
- **que** le corps intérieur (6) est ajusté dans le corps extérieur (2) de telle sorte qu'une ou plusieurs parties de la surface intérieure du corps extérieur (2) reposent sur des parties de la surface extérieure du corps intérieur (6), et
- **que** lorsque les mouvements relatifs liés aux vibrations du corps extérieur (2) et du corps intérieur (6) sont absorbés entre le corps extérieur (2) et le corps intérieur (6), il y a un déplacement libre dans la direction axiale avant qu'au moins un élément amortisseur (9, 30, 40) ne compense le déplacement libre.

2. Cylindre rotatif selon la revendication 1, **caractérisé par le fait qu'**au moins un élément amortisseur (9, 30, 40) absorbe les forces de cisaillement résultant des mouvements relatifs du corps extérieur (2) et du corps intérieur (6) dus aux vibrations.

3. Cylindre rotatif selon la revendication 1 ou 2, **caractérisé par le fait qu'**au moins un élément amortisseur (9, 30, 40) interagisse avec au moins un logement associé formé sur le corps extérieur et/ou intérieur (2, 6).

4. Cylindre rotatif selon la revendication 3, **caractérisé par le fait qu'**au moins un élément amortisseur (9, 30, 40) interagisse avec un logement sur le corps extérieur (2) et un logement sur le corps intérieur (6) associé au logement sur le corps extérieur (2).

5. Cylindre rotatif selon au moins l'une des revendications précédentes, **caractérisé par le fait que** le dispositif d'amortissement est formé dans la zone dans laquelle une ou plusieurs parties de la surface intérieure du corps extérieur (2) reposent sur les parties de la surface extérieure du corps intérieur (6) associées.

6. Cylindre rotatif selon au moins l'une des revendications précédentes, **caractérisé par le fait que** le dispositif d'amortissement est formé en dehors de la zone dans laquelle une ou plusieurs parties de la surface intérieure du corps extérieur (2) reposent sur les parties de la surface extérieure du corps intérieur (6) associées.

7. Cylindre rotatif selon au moins l'une des revendications précédentes, **caractérisé par le fait que** le dispositif d'amortissement est formé de manière radiale tout autour.

8. Cylindre rotatif selon au moins l'une des revendications précédentes, **caractérisé par le fait que** le dispositif d'amortissement est formé de manière axiale en longueur.

9. Cylindre rotatif selon au moins l'une des revendications précédentes, **caractérisé par le fait qu'**au moins un élément amortisseur (30) est formé avec une partie amortissante en surface entre la surface intérieure du corps extérieur (2) et la surface extérieure du corps intérieur (6).

10. Cylindre rotatif selon au moins l'une des revendications précédentes, **caractérisé par le fait que** le dispositif d'amortissement est formé pour amortir les vibrations de flexion du corps extérieur (2).

11. Cylindre rotatif selon au moins l'une des revendications précédentes, **caractérisé par le fait que** le corps extérieur (2) est conçu en tant que corps extérieur porteur.

12. Cylindre de presse d'imprimerie comprenant un cylindre rotatif selon au moins l'une des revendications précédentes.
